# EUROPEAN PATENT SPECIFICATION

(11) **EP 2 813 426 B1**
(45) Date of publication and mention of the grant of the patent: **11.10.2017**
(21) Application number: 13171702.7
(22) Date of filing: 12.06.2013
(51) Int. Cl.: B64C 1/14, B64D 11/00

(54) **Shell structure of a fuselage at a door opening and method of forming the shell structure**
Rumpfschale mit einer Türöffnung und Verfahren zur Herstellung der Rumpfschale
Coque d'un fuselage comprenant une ouverture de porte et procédé de formation de ladite structure

(43) Date of publication of application: 17.12.2014
(73) Proprietor: Airbus Operations GmbH, 21129 Hamburg (DE)
(72) Inventor: Jörn, Paul, 21129 Hamburg (DE); Brok, Wouter, 21129 Hamburg (DE); Metten, Martin, 21129 Hamburg (DE)
(74) Representative: Schicker, Silvia

(56) References cited:
- EP-A2- 2 316 733
- FR-A1- 2 947 241
- US-A- 3 658 277
- US-A1- 2005 211 841

## Description

The invention relates to a shell structure of a fuselage and, in particular, a shell structure of a fuselage at a door opening of the fuselage. Further, the invention relates to a method for forming a shell structure and, in particular, for forming a shell structure of a fuselage at a door opening of the fuselage.

Current fuselages, such as fuselages of passenger aircrafts, are built according to a semi-monocoque construction. This construction includes a load-bearing outer skin of the fuselage which is provided with stringers and ribs for stiffening the outer skin. Due to the regular arrangement of stringers and ribs, an equal load distribution around the entire fuselage can be achieved.

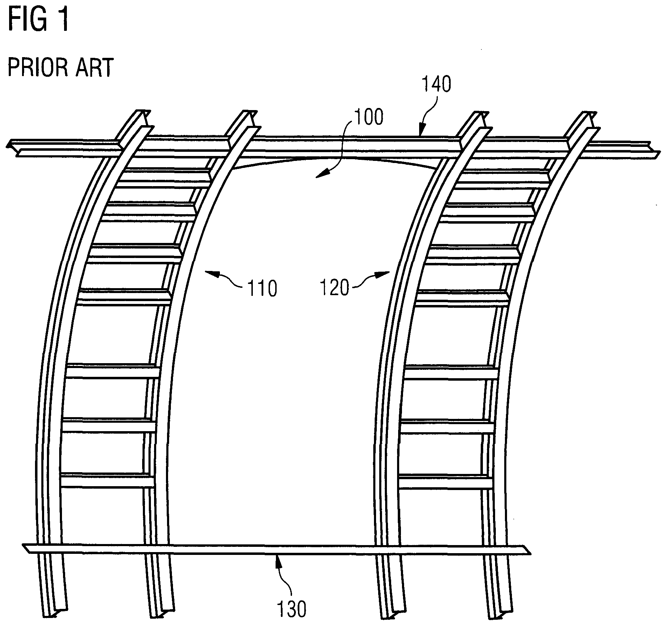

A problem of maintaining or achieving an equal load distribution arises at openings in the fuselage, and in particular at larger openings, such as a door opening. The loads of the fuselage have to be diverted around the door opening. A common door frame structure of a fuselage therefore includes a higher number of stringers and ribs than other parts of the structure. Such a conventional door frame arrangement is illustrated by figure 1. It shows a door opening 100 surrounded by particular frame elements. To the left of the door opening 100 is a left side ladder 110, while a right side ladder 120 is provided on the right hand side of the door opening 100. Each of the side ladders 110 and 120 comprises a pair of ribs and a plurality of stringers provided between the pair of rib. The ribs of each ladder may be arranged closer to each other than the remaining ribs of the fuselage. These ladders 110 and 120 provide for a diversion of the load carried by the primary structure, and in particular the outer skin, around the door opening 100. In addition, the ladders 110 and 120 provide enough strength to mount the door mechanic, such as hinges and locking mechanisms.

Moreover, at the bottom of the door opening 100, a lower sill 130 is located. This lower sill 130 is arranged substantially parallel to the stringers of ladders 110 and 120. Similarly, a lintel 140 is arranged at the top of the door opening substantially parallel to the stringers. The lower sill 130 and lintel 140 are connected to the ribs of ladders 110 and 120 facing the door opening 100. Alternatively, the lower sill 130 and lintel 140 can extend to the outer ribs of ladders 110 and 120 or may even further extend to another rib (not shown).

The elements depicted in figure 1 are all part of the primary structure of the fuselage. This prior art is for example illustrated by document FR-A-2 947 241. The invention is directed at the object of providing a light-weight and cost-effective shell structure of a fuselage at a door opening. Furthermore, the invention is directed at the object of providing a method for forming a light-weight and cost-effective shell structure of a fuselage at a door opening.

These objects are achieved by a shell structure according to claim 1 and a method for forming a shell structure according to claim 9.

A shell structure of a fuselage at a door opening according to the invention comprises a main door frame arranged on a cross-sectional plane of the fuselage. The cross-sectional plane on which the main door frame is arranged may be perpendicular to a longitudinal axis of the fuselage. Alternatively, the cross-sectional plane may form an angle with the longitudinal axis of the fuselage. The arrangement of the cross-sectional plane and, hence, of the main door frame depends on the form of the door opening. For instance, if the door opening has a trapezoidal shape, the main door frame may be arranged on a cross-sectional plane forming an angle with the longitudinal axis of the fuselage.

A wall portion of the main door frame extends into the fuselage and forms at least part of a first monument wall. The monument may be a lavatory, a galley or any other monument suitable for arrangement in an aircraft cabin, wherein the aircraft cabin may include a passenger cabin and a cargo area. Hence, the monument may be a monument suitable for arrangement in a passenger cabin and/or a cargo area of an aircraft. According to an implementation, the wall portion of the main door frame is integrally formed with the main door frame. Alternatively, the wall portion may be attached to the main door frame by bolts, rivets, welding or any other connecting method or element. The wall portion of the main door frame may form a part of the monument wall. Alternatively, the wall portion may form the entire monument wall. In case it forms only part of the monument wall, the wall portion may have any shape, such as a rectangular, triangular, trapezoidal, elliptic, circular or even a free form shape.

By providing the fuselage shell structure with a main door frame having a wall portion which extends into the fuselage and forms at least part of a first monument wall, a particular light-weight structure of the fuselage can be obtained, since primary structure elements and monument structure elements are combined and/or integrated with each other. Moreover, many items, such as attachment points for the monument, can be provided already with the primary structure. Hence, less processing steps during final assembly of the fuselage have to be performed, which is cost-saving for the overall process of constructing and assembling a fuselage, in particular an aircraft fuselage.

Further, a conventional frame structure around a door opening as described above with respect to figure 1 is not necessary any more. The wall portion of the main door frame significantly increases the loads which can be carried by the main door frame and/or auxiliary door frame. The frame structure surrounding a door, therefore, has a particularly high stiffness. In case of a crash, the high stiffness of the shell structure is beneficial, since deformations due to the crash are reduced or avoided allowing an easy opening of the door.

The shell structure may further comprise an auxiliary door frame arranged on a cross-sectional plane of the fuselage and at a distance to the main door frame. As with the main door frame, the cross-sectional plane on which the auxiliary door frame is arranged may be perpendicular to the longitudinal axis of the fuselage or may form an angle therewith. If the door opening has a substantially rectangular form, the auxiliary door frame may be arranged substantially perpendicular to the longitudinal axis of the fuselage. If the door opening has a trapezoidal shape, the auxiliary door frame may form an angle with the longitudinal axis of the fuselage. The main door frame and the auxiliary door frame may be parallel to each other. Alternatively, as in the case of a trapezoidal door opening, the main door frame and the auxiliary door frame may taper.

A wall portion of the auxiliary door frame may extend into the fuselage and may form at least part of a second monument wall. The wall portion of the auxiliary door frame may be formed in the same manner as described above for the wall portion of the main door frame. Additionally, the wall portion of the auxiliary door frame may have the same shape and size as the wall portion of the main door frame. Alternatively, the wall portion of the auxiliary door frame may have the same shape but a different size than the wall portion of the main door frame. Also alternatively, the wall portion of the auxiliary door frame may have a different shape and a different size than the wall portion of the main door frame.

By providing the fuselage shell structure with also an auxiliary door frame having a wall portion which extends into the fuselage and forms at least part of a second monument wall, the combination and/or integration of primary structure elements and monument structure elements is further enhanced resulting in further weight reductions and cost savings.

A main door frame and an auxiliary door frame arranged at a distance therefrom may form two walls of a monument, wherein the monument may be arranged in a passenger cabin and/or a cargo area of an aircraft. Further, two monuments, which again may be arranged in a passenger cabin and/or a cargo area of an aircraft may be arranged adjacent to a door opening. In this case, two main door frames adjacent the door opening as well as two auxiliary door frames may be provided which form at least part of a first and a second monument wall of the two monuments. The first and/or second wall portion may extend into the fuselage as far as necessary for the loads to be carried by the respective door frame and/or necessary for the monument to be built at the location of the respective door frame.

The shell structure according to the invention may further comprise an intercostal. The intercostal of the shell structure may be arranged substantially parallel to a longitudinal axis of the fuselage. The intercostal may be connected to at least one of the main door frame and the auxiliary door frame. It may form a longitudinal item of the monument. A longitudinal item of the monument may be a table, a baby changing table, a sideboard, a shelf, or a similar horizontal element used within a monument.

The intercostal may be arranged in a direction different from being parallel to the longitudinal axis of the fuselage. The intercostal may be arranged in a manner forming an angle with the longitudinal axis of the fuselage. Further, the arrangement of the intercostal may depend on the arrangement of the main door frame and/or the auxiliary door frame. According to an implementation, the intercostal is arranged perpendicular to the main door frame and/or the auxiliary door frame.

The main door frame, auxiliary door frame, intercostal, wall portion of the main door frame and/or wall portion of the auxiliary door frame may be made of the same material as the remaining primary structure of the fuselage. Such materials can be metal, such as aluminum, or a composite material, such as a fiber reinforced material, carbon fiber reinforced plastic (CFRP) or the like. Further, the main door frame, auxiliary door frame, intercostal, wall portion of the main door frame and/or wall portion of the auxiliary door frame may be provided with a top layer which is suitable for the interior design of the monument. Thus, the primary structure is protected from direct access by passengers or staff. At the same time, the top layer may be made of material and in a form necessary for interior elements and components of the monument.

The shell structure according to the invention may further comprise an outer skin attached to an outer face of the main door frame and/or an outer face of the auxiliary door frame. Alternatively or in addition, the shell structure may further comprise a skin doubler connected to an inner face of the outer skin. The skin doubler may be integrated into the monument. For instance, the skin doubler may be provided with an inner lining for the monument.

According to a further implementation, the wall portion of the main door frame extends vertically above a horizontal plane formed by a lintel of the door opening and/or below a horizontal plane formed by a sill of the door opening. The vertically extending wall portion of the main door frame may be a part of the main door frame or corresponding rib of the fuselage. The extending wall portion may be formed integrally with or be connected to the main door frame and/or a rib in a load-bearing manner. A section of the wall portion which extends below the sill may form at least part of a first monument wall associated with a monument which is arranged in a cargo area of the aircraft. The entire monument wall may form a plate within the primary structure of the fuselage.

Further, a floor structure may be connected to the wall portion of the main door frame. Specifically, the floor structure may be connected to a region of the wall portion of the main door frame which extends vertically below the horizontal plane defined by the sill of the door opening. The wall portion of the main door frame may include attachment elements for connecting the floor structure to it.

The shell structure according to the invention may further comprise one or more attachment elements for attaching at least one non-structural element. An attachment element may be connected to one of the main door frame, the auxiliary door frame, the wall portion of the main door frame, the wall portion of the auxiliary door frame and the intercostal.

The at least one non-structural element may comprise a monument interior element, a monument lining, an aisle lining, a galley attachment element, a lavatory or galley door, a table, a cabin element and/or a crew member seat. Further, the at least one non-structural element may comprise one or more component(s) of an aircraft supply system, such as electric cables, electric lines, signal lines as well as lines or tubes of a water or air supply system of the aircraft. Non-structural elements associated with an aircraft supply system may be used for supplying the monument with electric energy, water, air, etc., but also may be simply guided through the monument using the attachment elements of the shell structure.
According to another aspect of the invention, a method of forming a shell structure of a fuselage at a door opening of the fuselage comprises: arranging a main door frame on a cross-sectional plane of the fuselage, and forming at least part of a first monument wall by extending a wall portion of the main door frame into the fuselage. Forming at least part of the first monument wall may include forming an integral wall portion with the main door frame or forming a detachable wall portion of the main door frame.

Furthermore, the method according to the invention may comprise: arranging an auxiliary door frame on a cross-sectional plane of the fuselage and at a distance to the main door frame, and forming at least part of a second wall portion by extending a wall portion of the auxiliary door frame into the fuselage. Again, the forming of at least part of the second monument wall may include forming an integral wall portion with the auxiliary door frame or forming a detachable wall portion of the auxiliary door frame.

According to an implementation, the method according to the invention may comprise: arranging an intercostal substantially parallel to a longitudinal axis of the fuselage, and connecting the intercostal to at least one of the main door frame and the auxiliary door frame. The intercostal may form a longitudinal item of the monument. A longitudinal item of the monument may be a table, a baby changing table, a sideboard, a shelf, or a similar horizontal element used within a monument. The method may also comprise connecting the intercostal to an outer skin of the fuselage.

Alternatively, the intercostal may be arranged in a direction different from being parallel to the longitudinal axis of the fuselage. The intercostal may be arranged in a manner forming an angle with the longitudinal axis of the fuselage. Further, the arrangement of the intercostal may depend on the arrangement of the main door frame and/or the auxiliary door frame. According to an implementation, the intercostal is arranged perpendicular to the main door frame and/or the auxiliary door frame.

Each of the steps of arranging and connecting according to the invention may be performed during forming a primary structure of the fuselage. Furthermore, at least one non-structural item of the interior of the fuselage and/or the monument may be mounted to the primary structure of the fuselage during final assembly of the fuselage.

In addition, the method according to the invention may further comprise: attaching a skin doubler on an inner face of the outer skin in an area where the monument is located. This area may be located between the main door frame and the auxiliary door frame. The skin doubler provides for skin reinforcement.

The outer skin of the fuselage may be a standard skin as in the remaining parts of the fuselage. Thus, during forming the primary structure of the fuselage, only a single type of outer skin may be used. In a second step, e.g. during final assembly of the fuselage, the skin doubler may be applied to the outer skin. The application of the skin doubler may be a bonding process or an attachment process including bolts. If bolts are used, a bolt may be a crack arrest feature.

Brackets and/or attachment points for other elements may be attached to or integrated into the primary structure during the forming of the primary structure of the fuselage.

Furthermore, an area above the door opening may be used as an interior structure into which the primary structure is integrated. For instance, an overhead bin or similar structure may be arranged in the area above a horizontal plane defined by the lintel of the door opening. An intercostal or lintel extension may be integrated into the overhead bin. A lintel extension is a part of the lintel extending horizontally into the interior of the fuselage. Similarly, below the door opening, the floor structure can be combined with the monument structure and/or the door frame structure.

Preferred embodiments of the invention are now described in greater detail with reference to appended schematic drawings, wherein
- Figure 1: schematically shows a three-dimensional view of a conventional door frame structure;
- Figure 2: shows a sectional plane view of a door surrounding structure according to an embodiment of the invention; and
- Figure 3: schematically shows a cross-sectional view of a fuselage at a door opening.

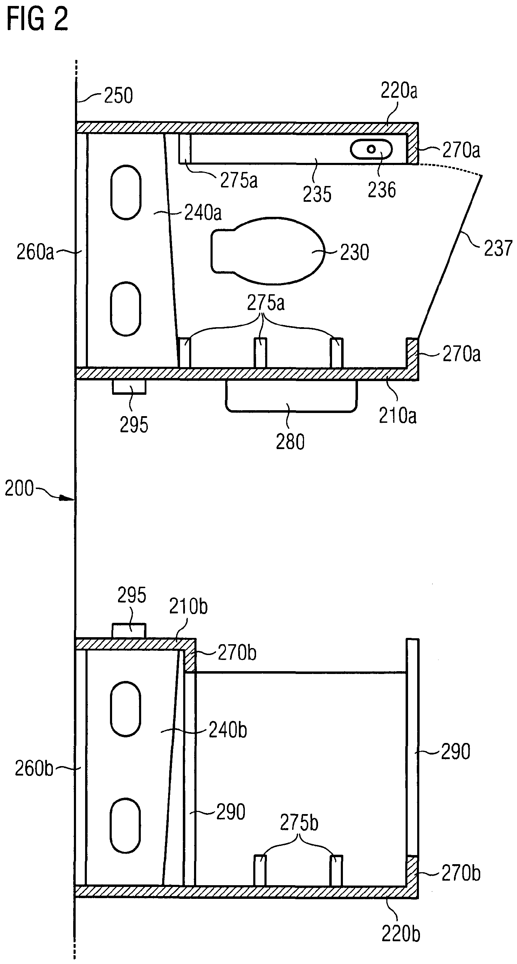

Figure 2 schematically shows a sectional plane view of a shell structure of an aircraft fuselage at a door opening 200. The primary structure around the door opening 200 comprises a first main door frame 210a which is arranged adjacent to the door opening 200 and in a cross-sectional plane of the fuselage. The cross-sectional plane of the fuselage extends vertically and is substantially perpendicular to a longitudinal axis of the fuselage. The main door frame 210a extends into the fuselage and forms a first wall of a monument.

The door surrounding structure may further include an auxiliary door frame 220a which also extends vertically and is arranged in a cross-sectional plane of the fuselage. The auxiliary door frame 220a extends into the fuselage and forms a second wall of the monument. The auxiliary door frame 220a is disposed at a distance from the main door frame 210a, wherein the space between the main door frame 210a and the auxiliary door frame 220a depends on the space required by the monument. For instance, in the exemplary embodiment depicted in figure 2, the monument may be a lavatory which is arranged in a passenger cabin of an aircraft. The monument, however, may also be arranged in a cargo area of the aircraft. A lavatory requires space for a toilet 230, a table or sideboard 235 and a sink 236. The invention is not limited to these interior components of the monument. For instance, other components, such as a mirror, a waste box etc., can also be arranged within the monument.

The cross-sectional plane on which the main door frame 210a and/or the auxiliary door frame 220a is/are arranged is perpendicular to a longitudinal axis of the fuselage. Alternatively, the cross-sectional plane forms an angle with the longitudinal axis of the fuselage. The arrangement of the cross-sectional plane depends on the primary structure of the fuselage and/or the form of the door opening 200. For instance, if the door opening 200 has a trapezoidal shape, the main door frame 210a is arranged on a cross-sectional plane forming an angle with the longitudinal axis of the fuselage. The main door frame 210a and the auxiliary door frame 220a may be parallel to each other. Alternatively, as in the case of a trapezoidal door opening 200, the main door frame 210a extends at an angle to the longitudinal axis, while the auxiliary door frame 220a is arranged substantially parallel to the main door frame 210a. Thus, the main door frame 210a and the auxiliary door frame 220a may taper towards each other.

The main door frame 210a and the auxiliary door frame 220a are connected to an outer skin 250 of the fuselage. This connection allows loads to be transmitted into/from the outer skin 250 from/into the main door frame 210a and the auxiliary door frame 220a.

Furthermore, the primary structure of the fuselage may include an intercostal 240a. The intercostal 240a may be connected to the main door frame 210a and/or the auxiliary door frame 220a. The intercostal 240a is arranged in a horizontal plane and substantially parallel to the longitudinal axis of the fuselage. It may further be connected to the outer skin 250 of the fuselage. In this manner, the intercostal 240a provides strengthening to and reduces bulging of the outer skin 250. The dimensions of the intercostal 240a can be adapted to the loads to be transmitted as well as to an interior element of the monument. Such interior element can be a table, a baby changing table, a sideboard, a shelf etc.. It is preferable to connect the intercostal 240a to the main door frame 210a and the auxiliary door frame 220a in order to create good load-bearing and/or load-transmitting capabilities of the intercostal 240a.

To further strengthen the primary structure, and, in particular, the outer skin 250, a skin doubler 260a can be provided on an inner face of the outer skin 250. The skin doubler 260a can be provided in an area defined by the monument, i.e. between the main door frame 210a and the auxiliary door frame 220a. Vertically, the skin doubler 260a can also be adapted to the vertical dimensions of the monument. The invention is not limited to such skin doubler dimensions. The skin doubler 260a can also be smaller or extend horizontally and vertically over the monument dimensions.

In addition, the main door frame 210a and/or the auxiliary door frame 220a can include attachment elements. Such attachment elements can be integrated with the main door frame 210a and/or auxiliary door frame 220a. The integrated attachment elements are depicted in figure 2 and referred to as elements 270a. For instance, attachment elements 270a may be used to attach the lavatory door 237 and its closing structures.

Furthermore, attachment elements 275a can also be connected to the primary structure at a later stage of the manufacturing process. Figure 2 depicts attachment elements 275a to attach a table 235, a shelf (not shown) and a crew member seat 280. The attachment of the crew member seat 280 at the main door frame 210a provides the advantage that the crew member seat 280 is directly connectable to the primary structure of the fuselage. The safety of the crew member, for example during a crash, is therefore improved.

Alternatively or additionally, a different type of monument can be provided adjacent a door opening 200. As it is depicted in figure 2, to the left of the door opening 200, a galley monument is provided. This monument also includes a main door frame 210b as well as an auxiliary door frame 220b. The main difference between the two monuments is the opening for galley carts to be stored away within the monument. Thus, the main door frame 210b requires an opening or has a reduced length of extension into the fuselage compared to the main door frame 210a of the lavatory monument.

The primary structure can, nevertheless, include the same or similar primary structure components as with the above embodiment of a lavatory monument. In detail, the galley monument can include an intercostal 240b, a skin doubler 260b, integrated attachment elements 270b and further attachment elements 275b. Since the functioning is the same as with the lavatory monument, the description of these components and elements is omitted.

The monument can further include interior elements 290, such as partitioning walls. These elements can be introduced in a final assembly line (FAL), since they are not part of the primary structure.

In addition to the attachment elements 270a, 270b, 275a and 275b, a door kinematic 295 and/or door stops can be integrated and/or connected to the primary structure. For instance, the door kinematic components and/or door stops can be integrated and/or connected to the main door frame 210a as well as the main door frame 210b. This also reduces weight, since additional primary structure elements for attaching the door kinematic can be omitted. Moreover, due to a higher stiffness of the door frame structure, the door can be opened easier after a crash, hence, increasing security.

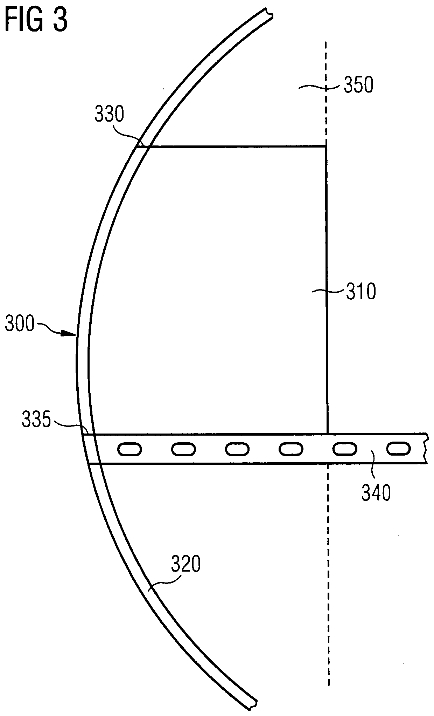

Figure 3 schematically illustrates a cross-sectional view of a fuselage at a door opening 300. As illustrated in figure 3, a door frame structure, such as a main door frame, extends into the fuselage within a cross-sectional plane of the fuselage. This main door frame is part of a rib 320 of the fuselage. The rib 320 extends over the entire cross-section of the fuselage and forms an entire circumferential structure.

A wall portion 310 of the main door frame faces away from the outer skin and extends into the cabin of the fuselage. The wall portion 310 may form only a part of the monument wall. Alternatively, the wall portion 310 may form the entire monument wall. In case it forms only part of the monument wall, the wall portion 310 may have any shape, such as a rectangular, triangular, trapezoidal, elliptic, circular or even a free form shape.

The wall portion 310 of the main door frame can also extend above and below a lintel 330 and a sill 335 of the door opening 300. This vertical extension of the wall portion 310 is illustrated with dashed lines. Such extended wall portion 310 provides a high stiffness, since a plate or slap is provided in a large cross-sectional area of the fuselage. Further, a section of the wall portion 310 which extends below the sill 335 may form at least part of a first monument wall associated with a monument which is arranged in a cargo area of the aircraft.

According to the illustrated embodiment, the fuselage further comprises a floor element 340. This floor element 340 can be attached to the wall portion 310 of the door frame, since the wall portion 310 is part of the primary structure and can carry loads. Thus, additional load carrying elements of the primary structure to which the floor element 340 is connected can be omitted.

Furthermore, an area 350 above the lintel 330 can be used as an overhead bin or similar interior structure. Within this interior structure, intercostals or other primary structure elements can be integrated. Thus, the space 350 can be optimally used by primary structure elements and interior structures.

Although specific features of individual components of a shell structure at a door opening of a fuselage are described in connection with specific embodiments of the shell structure, the features can also be present in other embodiments and/or implementations. For example, a shell structure according to the invention can also comprise only a main door frame which is integrated into an aisle wall. In this case, the aisle wall may separate an entrance aisle from the passenger cabin. The aisle wall may further be used to attach a floor element or overhead bin. Thus, according to the invention an entire monument has not to be formed next to the door opening.

## Claims

1. A combination of a monument wall and a shell structure of a fuselage at a door opening (200, 300) of the fuselage, the shell structure comprising:
- a main door frame (210a, 210b) arranged on a cross-sectional plane of the fuselage, **characterized in that**:
a wall portion (310) of the main door frame (210a, 210b) extends into the fuselage and forms at least part of said first monument wall.

2. The combination according to claim 1, further comprising:
- a second monument wall,
- an auxiliary door frame (220a, 220b) arranged on a cross-sectional plane of the fuselage and at a distance from the main door frame (210a, 210b),
wherein a wall portion of the auxiliary door frame (220a, 220b) extends into the fuselage and forms at least part of said second monument wall.

3. The combination according to claim 2, further comprising:
- an intercostal (240a, 240b) of the shell structure arranged substantially parallel to a longitudinal axis of the fuselage and connected to at least one of the main door frame (210a, 210b) and the auxiliary door frame (220a, 220b).

4. The combination according to claims 2 or 3, further comprising:
- a monument comprising the first and second monument walls,
- an outer skin (250) attached on an outer face of the main door frame (210a, 210b) and
- a skin doubler (260a, 260b) connected to an inner face of the outer skin (250) and being integrated into said monument.

5. The combination according to any one of claims 1 to 4, wherein the wall portion (310) of the main door frame (210a, 210b) extends vertically above a horizontal plane defined by a lintel (330) of the door opening (300) and/or below a horizontal plane defined by a sill (335) of the door opening (300), and/or wherein the vertically extending wall portion (310) of the main door frame (210a, 210b) is connected to a rib (320) of the fuselage.

6. The combination according to claim 5, further comprising a floor structure (340), wherein said floor structure (340) is connected to a region of the wall portion (310) of the main door frame (210a, 210b) which extends vertically below the horizontal plane defined by the sill (335) of the door opening (300).

7. The combination according to any one of claims 3 to 6, further comprising:
- one or more attachment elements (270a, 270b, 275a, 275b) for attaching at least one non-structural element, each attachment element (270a, 270b, 275a, 275b) being connected to one of the main door frame (210a, 210b), the auxiliary door frame (220a, 220b), the wall portion (310) of the main door frame (210a, 210b), the wall portion of the auxiliary door frame (220a, 220b) and the intercostal (340).

8. The combination according to claim 7, wherein the at least one non-structural element comprises a monument interior element, a monument lining, an aisle lining, a galley attachment element, a lavatory or galley door, a table, a cabin element, a crew member seat and/or a component of an aircraft supply system.

9. A method for forming a shell structure of a fuselage at a door opening (300) of the fuselage, the method comprising:
- arranging a main door frame (210a, 210b) on a cross-sectional plane of the fuselage, and
- forming at least a part of a first monument wall by extending a wall portion (310) of the main door frame (210a, 210b) into the fuselage.

10. The method according to claim 9, further comprising:
- arranging an auxiliary door frame (220a, 220b) on a cross-sectional plane of the fuselage and at a distance to the main door frame (210a, 210b), and
- forming at least a part of a second monument wall by extending a wall portion of the auxiliary door frame (220a, 220b) into the fuselage.

11. The method according to claim 10, further comprising:
- arranging an intercostal (340) substantially parallel to a longitudinal axis of the fuselage, and
- connecting the intercostal (340) to at least one of the main door frame (210a, 210b) and the auxiliary door frame (220a, 220b).

12. The method according to any of claims 9 to 11,
wherein each of the steps of arranging and connecting is performed during forming a primary structure of the fuselage.

13. The method according to claim 12,
wherein at least one non-structural item of the interior of the fuselage is mounted to the primary structure of the fuselage during final assembly of the fuselage.

## Patentansprüche

1. Kombination aus einer Monumentwand und einer Rumpfschale an einer Türöffnung (200, 300) des Rumpfes, wobei die Rumpfschale umfasst:
- einen Haupttürrahmen (210a, 210b), der auf einer Querschnittsebene des Rumpfes angeordnet ist,
**dadurch gekennzeichnet, dass**
sich ein Wandabschnitt (310) des Haupttürrahmens (210a, 210b) in den Rumpf hinein erstreckt und zumindest einen Teil der ersten Monumentwand bildet.

2. Kombination nach Anspruch 1, ferner umfassend:
- eine zweite Monumentwand,
- einen zusätzlichen Türrahmen (220a, 220b), der auf einer Querschnittsebene des Rumpfes und von dem Haupttürrahmen (210a, 210b) beabstandet vorgesehen ist, wobei sich ein Wandabschnitt des zusätzlichen Türrahmens (220a, 220b) in den Rumpf hinein erstreckt und zumindest einen Teil der zweiten Monumentwand bildet.

3. Kombination nach Anspruch 2, ferner umfassend:
- ein Zwischenelement (240a, 240b) der Rumpfschale, das im Wesentlichen parallel zu einer Längsachse des Rumpfes angeordnet und mit zumindest entweder dem Haupttürrahmen (210a, 210b) oder dem zusätzlichen Türrahmen (220a, 220b) verbunden ist.

4. Kombination nach Anspruch 2 oder 3, ferner umfassend:
- ein Monument mit einer ersten und einer zweiten Monumentwand,
- eine äußere Haut (250), die an einer Außenseite des Haupttürrahmens (210a, 210b) befestigt ist,
- eine Verstärkungshaut (260a, 260b), die mit einer Innenseite der Außenhaut (250) verbunden und in das Monument integriert ist.

5. Kombination nach einem der Ansprüche 1 bis 4,
wobei sich der Wandabschnitt (310) des Haupttürrahmens (210a, 210b) vertikal über einer horizontalen Ebene erstreckt, die durch einen Sturz (330) der Türöffnung (300) definiert wird, und/oder unter einer horizontalen Ebene erstreckt, die durch eine Schwelle (335) der Türöffnung (300) definiert wird, und/oder wobei der sich vertikal erstreckende Wandabschnitt (310) des Haupttürrahmens (210a, 210b) mit einer Rippe (320) des Rumpfes verbunden ist.

6. Kombination nach Anspruch 5, ferner umfassend einen Boden (340),
wobei der Boden (340) mit einem Bereich des Wandabschnitts (310) des Haupttürrahmens (210a, 210b) verbunden ist, der sich vertikal unter der durch die Schwelle (335) der Türöffnung (300) definierten horizontalen Ebene erstreckt.

7. Kombination nach einem der Ansprüche 3 bis 6, ferner umfassend:
- ein oder mehrere Befestigungselement(e) (270a, 270b, 275a, 275b) zur Befestigung zumindest eines nicht-strukturellen Elements, wobei jedes Befestigungselement (270a, 270b, 275a, 275b) mit entweder dem Haupttürrahmen (210a, 210b), dem zusätzlichen Türrahmen (220a, 220b), dem Wandabschnitt (310) des Haupttürrahmens (210a, 210b), dem Wandabschnitt des zusätzlichen Türrahmens (220a, 220b) oder dem Zwischenelement (340) verbunden ist.

8. Kombination nach Anspruch 7, wobei das zumindest eine nicht-strukturelle Element eine Monumentinnenausstattungskomponente, eine Monumentverkleidung, eine Gangverkleidung, ein Bordküchen-Befestigungselement, eine Bordtoiletten- oder Bordküchentür, einen Tisch, ein Kabinenelement, einen Sitz für ein Crewmitglied und/oder eine Komponente eines Flugzeug-Versorgungssystems umfasst.

9. Verfahren zur Bildung einer Rumpfschale an einer Türöffnung (300) des Rumpfes, umfassend:
- Anordnen eines Haupttürrahmens (210a, 210b) auf einer Querschnittsebene des Rumpfes und
- Bilden zumindest eines Teils einer ersten Monumentwand durch Verlängern eines Wandabschnitts (310) des Haupttürrahmens (210a, 210b) in den Rumpf hinein.

10. Verfahren nach Anspruch 9, ferner umfassend:
- Anordnen eines zusätzlichen Türrahmens (220a, 220b) auf einer Querschnittsebene des Rumpfes und von dem Haupttürrahmen (210a, 210b) beabstandet und
- Bilden zumindest eines Teils einer zweiten Monumentwand durch Verlängern eines Wandabschnitts des zusätzlichen Türrahmens (220a, 220b) in den Rumpf hinein.

11. Verfahren nach Anspruch 10, ferner umfassend:
- Anordnen eines Zwischenelements (340) im Wesentlichen parallel zu einer Längsachse des Rumpfes und
- Verbinden des Zwischenelements (340) mit zumindest entweder dem Haupttürrahmen (210a, 210b) oder dem zusätzlichen Türrahmen (220a, 220b).

12. Verfahren nach einem der Ansprüche 9 bis 11,
wobei jeder der Schritte des Anordnens und Verbindens während der Bildung einer Primärstruktur des Rumpfes durchgeführt wird.

13. Verfahren nach Anspruch 12,
wobei zumindest ein nicht-strukturelles Element des Rumpfinneren während der Endmontage des Rumpfes an die Primärstruktur des Rumpfes montiert wird.

## Revendications

1. Combinaison d'une paroi de monument et d'une structure de coque d'un fuselage au niveau d'une ouverture de porte (200, 300) du fuselage, la structure de coque comprenant :
- un cadre de porte principal (210a, 210b) disposé sur un plan transversal du fuselage, **caractérisée par le fait que** : une partie de paroi (310) du cadre de porte principal (210a, 210b) s'étend dans le fuselage et forme au moins une partie de ladite première paroi de monument.

2. Combinaison selon la revendication 1, comprenant en outre :
- une seconde paroi de monument,
- un cadre de porte auxiliaire (220a, 220b) disposé sur un plan transversal du fuselage et à une distance du cadre de porte principal (210a, 210b),
une partie de paroi du cadre de porte auxiliaire (220a, 220b) s'étendant dans le fuselage et formant au moins une partie de ladite seconde paroi de monument.

3. Combinaison selon la revendication 2, comprenant en outre :
- une lisse (240a, 240b) de la structure de coque disposée sensiblement parallèle à un axe longitudinal du fuselage et reliée à au moins un parmi le cadre de porte principal (210a, 210b) et le cadre de porte auxiliaire (220a, 220b).

4. Combinaison selon la revendication 2 ou 3, comprenant en outre :
- un monument comprenant les première et seconde parois de monument,
- un revêtement externe (250) fixé sur une face externe du cadre de porte principal (210a, 210b), et
- un renfort de revêtement (260a, 260b) relié à une face interne du revêtement externe (250) et intégré dans ledit monument.

5. Combinaison selon l'une quelconque des revendications 1 à 4, dans laquelle la partie de paroi (310) du cadre de porte principal (210a, 210b) s'étend verticalement au-dessus d'un plan horizontal défini par un linteau (330) de l'ouverture de porte (300) et/ou au-dessous d'un plan horizontal défini par un seuil (335) de l'ouverture de porte (300), et/ou dans laquelle la partie de paroi s'étendant verticalement (310) du cadre de porte principal (210a, 210b) est reliée à une nervure (320) du fuselage.

6. Combinaison selon la revendication 5, comprenant en outre une structure de plancher (340), ladite structure de plancher (340) étant reliée à une région de la partie de paroi (310) du cadre de porte principal (210a, 210b) qui s'étend verticalement au-dessous du plan horizontal défini par le seuil (335) de l'ouverture de porte (300).

7. Combinaison selon l'une quelconque des revendications 3 à 6, comprenant en outre :
- un ou plusieurs éléments de fixation (270a, 270b, 275a, 275b) pour fixer au moins un élément non structurel, chaque élément de fixation (270a, 270b, 275a, 275b) étant relié à l'un parmi le cadre de porte principal (210a, 210b), le cadre de porte auxiliaire (220a, 220b), la partie de paroi (310) du cadre de porte principal (210a, 210b), la partie de paroi du cadre de porte auxiliaire (220a, 220b) et la lisse (340).

8. Combinaison selon la revendication 7, dans laquelle l'au moins un élément non structurel comprend un élément intérieur de monument, un habillage de monument, un habillage d'allée, un élément de fixation d'office, une porte de toilettes ou d'office, une table, un élément de cabine, un siège de membre d'équipage et/ou un composant d'un système d'alimentation d'aéronef.

9. Procédé de formation d'une structure de coque d'un fuselage au niveau d'une ouverture de porte (300) du fuselage, le procédé comprenant :
- disposer un cadre de porte principal (210a, 210b) sur un plan transversal du fuselage, et
- former au moins une partie d'une première paroi de monument en étendant une partie de paroi (310) du cadre de porte principal (210a, 210b) dans le fuselage.

10. Procédé selon la revendication 9, comprenant en outre :
- disposer un cadre de porte auxiliaire (220a, 220b) sur un plan transversal du fuselage et à une distance du cadre de porte principal (210a, 210b), et
- former au moins une partie d'une seconde paroi de monument en étendant une partie de paroi du cadre de porte auxiliaire (220a, 220b) dans le fuselage.

11. Procédé selon la revendication 10, comprenant en outre :
- disposer une lisse (340) sensiblement parallèlement à un axe longitudinal du fuselage, et
- relier la lisse (340) à au moins un parmi le cadre de porte principal (210a, 210b) et le cadre de porte auxiliaire (220a, 220b).

12. Procédé selon l'une quelconque des revendications 9 à 11,
dans lequel chacune des étapes de disposition et de liaison est réalisée pendant la formation d'une structure primaire du fuselage.

13. Procédé selon la revendication 12,
dans lequel au moins un élément non structurel de l'intérieur du fuselage est monté sur la structure primaire du fuselage pendant l'assemblage final du fuselage.
